(19) **European Patent Office**

Europäisches Patentamt

Office européen des brevets

(11) **EP 0 992 569 A1**

(12) **EUROPEAN PATENT APPLICATION**

(43) Date of publication:
    **12.04.2000 Bulletin 2000/15**

(21) Application number: **98203365.6**

(22) Date of filing: **05.10.1998**

(51) Int. Cl.⁷: **C10M 101/04**, C10M 129/66,
    C10M 173/00, C09D 5/08,
    C08G 59/34, C09D 163/08

(84) Designated Contracting States:
    **AT BE CH CY DE DK ES FI FR GB GR IE IT LI LU
    MC NL PT SE**
    Designated Extension States:
    **AL LT LV MK RO SI**

(71) Applicant:
    **NEDERLANDSE ORGANISATIE VOOR
    TOEGEPAST-NATUURWETENSCHAPPELIJK
    ONDERZOEK
    TNO
    2628 VK  Delft (NL)**

(72) Inventor:
    **Roescher, Gerhardus Antonius
    5641 LB Eindhoven (NL)**

(74) Representative:
    **de Bruijn, Leendert C. et al
    Nederlandsch Octrooibureau
    P.O. Box 29720
    2502 LS  Den Haag (NL)**

(54) **Preservation/lubricant/primercomposition for metallic surfaces**

(57)    The invention relates to a preservation/lubricant/primer-composition for metallic substrates, in particular for steel substrates such as strip steel, comprising at least one epoxidized oil. The composition can further contain at least one cross-linking component, such as an UV-initiator or a fatty polyacid.

The epoxidized oil is preferably an epoxidized derivative of a natural unsaturated fat or oil, in particular an epoxidized derivative of a natural "drying oil".

The composition can be used as a preservative, a lubricant and/or a primer for metallic substrates,   in particular for storage/transportation, forming/(draw)processing, and/or applying a coating. The invention circumvents the use of separate compositions for each of these processing steps.

EP 0 992 569 A1

## Description

The present application relates to compositions for the protection and treatment of metallic substrates, in particular of steel substrates such as strip steel. More particular, the invention relates to such a composition which can function as a preservative during storage, as a lubricant during processing, and as a primer for subsequent application of a coating.

Steel is often produced in the form of "strip steel" or "coil", a sheet or band of metal which can be rolled up and as such can easily be stored and/or transported. Strip steel can also easily be formed, for instance by cold forming processes such as deep drawing, rolling, stretching or bending.

After production, strip steel is usually coated with a preservative composition in order to prevent corrosion during storage. Prior to further processing, this preservative is removed, i.e. by means of degreasing. The metal surface is then treated with a lubricant composition, which facilitates further processing and improves throughput. After forming, this lubricant composition is also removed, i.e. by washing. Thereafter, a primer composition is applied to the metal, upon which the final coating is applied.

The known methods for processing strip steel therefore involve the use of three different compositions and several processing steps, i.e.:

1. applying the preservative composition;
2. rolling up the strip steel, followed by storage/transportation;
3. removing the preservative composition by means of degreasing;
4. applying a lubricant composition;
5. forming such as by draw processing;
6. removing the lubricant composition by washing;
7. applying the primer composition;
8. applying the final coating.

The object of the invention is to improve the above methods, by reducing the number of processing steps required and/or by reducing the number of different compositions used. More particular, the object of the invention is to provide a composition which can function as a preservative for storage/transportation, as a lubricant for draw processing, and also as a primer for application for the final coating. Other objects of the invention will become clear from the description hereinbelow.

These objects are solved by the use of a composition which comprises at least an epoxidized oil, more particular of a cross-linkable composition containing at least an epoxidized oil. As the compositions of the invention can serve as a preservative, as a lubricant and as a primer, they will be indicated hereinbelow as "Preservation Lubricant Primers" or "PLP-compositions".

The term "epoxidized oil" as used herein generally refers to an epoxidized derivative of an unsaturated fat or oil. As known to the skilled person, fats and oils generally comprise a glycerol molecule linked by ester bonds to (usually) three fatty acid residues, in which the fatty acid residues comprise long hydrocarbon chains with generally 6-32, usually 9-24, often 16 or 18, carbon atoms. In unsaturated fats and oils, one or more of these hydrocarbon chains further contain(s) generally 3 or less, and usually 2 (conjugated or non-conjugated) or only 1 unsaturated bond(s) per chain. For a further description of unsaturated fats and oils and the unsaturated fatty acids that may be present therein, reference is made to the standard handbooks.

In the epoxidized oils used according to the invention, at least one, preferably two or more, and possibly up to essentially all the unsaturated bonds in the fatty acid triglyceride are replaced by epoxide-bonds. Preferably, the epoxidized oils used in the invention will contain on average at least two epoxy-groups per molecule.

In the invention, any epoxidized derivative of unsaturated fats and oils known per se can be used. Preferably, epoxidized derivatives of natural unsaturared oils such as fatty oils, vegetable oils or animal oils are used, although the invention is not limited thereto. For instance, synthetic epoxidized oils with specifically tailored properties can be used. Such synthetic oils can contain specific functional groups on the epoxidized fatty acid chains, or may contain one or even two different side chain(s) or groups on the glycerol molecule instead of the epoxidized fatty acid residue(s), as long as the final oil can still be crosslinked as described herein.

According to a specific embodiment, epoxidized derivatives of so-called "drying oils" are used, such as soyabean oil, linseed oil and fish oil, as well as epoxidized derivatives of so-called "synthetic" drying oils such as dehydrated castor oil, and/or modifications of such drying oils. Reference is made to Kirk-Othmer, "Encyclopedia of Chemical Technology", 4th Ed., vol.8, pages 519-531.

The epoxidized oils of the invention will generally have a degree of epoxidation of 50-100 %, more particular 80-100 %, depending upon the oil on which they are based. Preferably, the oils are epoxidized until an "epoxy-equivalent weight" or "EEW" (molecular weight per epoxy group) of at least 100, and prefeably about 200 is reached, in which the latter corresponds to 20% by weight epoxy groups (based on a $M_W$ of 42 for the epoxy group). Suitable mixtures of two or more epoxidized oils as described herein may also be used.

The epoxidized oils of the invention are commercially available or can be prepared by in a manner known per se, i.e. by chemical synthesis usually involving (ep)oxidation, for which reference is made to standard handbooks.

Examples of suitable commercially available epoxidized oils are epoxidized soya oils or ESO's (Edenol D81, Edenol D82, Estabex 2307, Drapex 6.8 and Reoplast 39), epoxidized linseed oils or ELO's (Edenol B316) and alkyl esters of unsaturated fatty acids, such as epoxidized alkyl esters of oleic acid (Estabex 2386, Drapex 3.2 and Reoplast 38). These epoxidized oils have been used as stabilizers and plastisizers in plastic compositions, in particular for PVC.

Known systems for treating metal substrates generally comprise components such as fatty esters, wetting improvers, soaps, viscosity controllers, anti-corrosion agents such as chromium compounds, or a combination thereof. As mentioned above, these known systems do not provide the combined function of a preservative, a lubricant and a primer. For instance, known lubricants can sometimes be highly viscous. Also, they must be removed prior to coating (i.e. after forming) by the use of organic solvents or water-based systems followed by drying, as primers/coatings will generally "spread" poorly over lubricant-treated surfaces. Also, the adhesion of primers to substrates treated with known lubricants is very poor.

Dutch application 7802712 tries to avoid these washing steps by the use of a lubricant composition that comprises at least a curable liquid component which is hardened after processing and prior to further coating. As the curable liquid component, (meth)acrylates, liquid epoxy resins, alkyd resins or aminoplasts are mentioned, which are cured thermally, by radiation or by free radicals. However, these compositions are not suggested or suitable as preservatives and also can be very toxic and consequently difficult to handle. Furthermore, the unsaturated materials of NL-A-7802712 can show poor stability, particularly when the thus coated coils are subjected to sunlight and outside air during storage. This may also detract from their lubricating properties.

European application 0 283 912 describes a cooling and lubricant composition comprising an aqueous emulsion of a film-forming binder, more particular an emulsion polymerisate or a heat-curable binder. Specific examples given comprise aqueous emulsions of epoxy resins, acrylate resins, phenol-modified polyesters, and of blockpolymers based on such resins, as well as heat-curable resins comprising melamin, urea or phenolics as cross-linkers. However, these compositions are not suggested or suitable as preservatives -probably because they may be insufficiently water-repellant to prevent corrosion- and are sticky when applied, which detracts from their lubricating properties.

Also, solid systems are known, for instance based on acrylate-, epoxy- or polyester resins. However, layers formed of such solid materials generally have poor lubricating properties and are not self-sealing.

In the invention, the use of the epoxidized oils provides for final PLP-compositions that are liquid at room temperature and/or at the temperature at which the PLP is to be applied onto the metal substrate. Compared to solid systems, their advantageous viscosity not only makes the PLP-compositions easier to apply -leading to a more uniform coating- and provides good lubricating properties, but also has the advantage that minor defects to the coating layer (scratches, pitting) as may occur during handling, transportation or processing of the treated substrate can be easily repaired by the coating itself ("self-sealing"), by "touching up" the existing layer or by applying a further coating layer.

As mentioned above, the PLP-compositions of the invention, and more particular the epoxidized oils used therein, must be cross-linkable (curable), by which is meant that the molecules of the epoxidized oils must be able to form covalent bonds with each other other and/or with the molecules of other suitable cross-linking components of the PLP-composition (if any) to form a crosslinked structure. In principle, any curing technique known per se can be used. However, according to the two preferred embodiments, either UV-curing or thermal curing will be used, as will be further discussed hereinbelow.

In practice, the PLP-compositions will usually contain at least one "cross-linking component" as described herein, i.e. a component which is involved in, initiates or facilitates the cross-linking reaction. This may be an initiator for the cross-linking reaction, for instance when UV-curing is used; a component involved in the formation of cross-linkages, such as a cross-linker (for example di-esters of di-acids such as dimethylsebacate) or a catalyst; or a further component of the PLP-composition capable of reacting with the epoxidized oil to form a crosslinked structure, such as the fatty polyacids described below.

Although not preferred, the PLP-compositions of the invention can also contain one or more further components known per se for preservatives, lubricants and/or primers, depending upon the desired properties of the composition and/or the coating and upon the curing technique used. For instance, they can contain adhesion-improvers, surfactants, anti-corrosion additives, viscosity controllers, flow improvers, stabilizers etc, in suitable amounts known per se. They may also contain minor amounts of unsaturated oils, in particular of those oils from which the epoxidized oils have been derived.

However, compared to known (top)coatings for metals, they will generally not contain pigments or fillers. Also, although the invention is not limited thereto, the compositions of the invention are usually essentially free of solvent.

The epoxidized oils of the invention and/or the optional other components of the PLP-compositions can also carry or be modified with further functional groups, if required, for instance to confer desired properties and/or to improve cross-linking. However, these groups are preferably chosen such that the compositions still meet the requirements set out herein.

Generally, the epoxidized oils and the further major components used in the PLP-compositions -such as the fatty acid component- will form a water-repellant coating. However, according to a specific embodiment, the compositions of the invention are in the form of an aqueous emulsion of at least the epoxidized oil. This may be a O/W- (preferred), W/O-, ternary or even quaternary emulsion. Such emulsions may have the advantage of a very low viscosity, which may be desired for certain applications.

The PLP-emulsions can be used in the same manner as non-aqueous PLP-compositions described herein. However, when PLP-emulsions are used, the method of the invention as set out below generally will comprise at least one drying step for removal of the aqueous phase, preferably directly after the emulsion has been applied to the substrate.

The PLP-compositions can be prepared in a manner known per se, generally by mixing the components in the amounts indicated herein. The PLP-emulsions can for instance be obtained by emulgating the at least one epoxidized oil and the further components of the PLP-composition in an aqueous medium such as water, optionally using stabilizers and/or emulsifiers, or by emulgating a finished PLP-composition an with aqueous medium, again optionally using stabilizers and/or emulsifiers.

The PLP-compositions of the invention combine the properties of a preservative, a lubricant and a primer. In particular, the PLP-compositions show a good adhesion to metallic substrates without being (too) sticky when applied and/or (fully or partially) cured. In this respect, it has been found that the use of the epoxidized oils provides a suitable balance between the adhesion to the metallic (steel) surface on the one hand and the "fatty" behaviour of the composition on the other.

Also, the PLP-compositions (in uncured, partially cured or fully cured form) can form a suitable (first) primer layer upon which a further primer and/or further coatings can be applied. In this respect, the PLP-compositions are not only compatible with known primers or coatings, but can even chemically bind such further coatings, for instance via residual epoxy-groups, in particular when (further or post-)curing of the PLP-composition occurs during the hardening of the further coating. This may lead to the formation of a two-layered coating system with a diffuse intermediate layer.

In particular, the PLP-compositions have been shown to possess the ability of undergoing chemical reactions with commercially available primer resins, such as primers based on epoxy resins or epoxy-functional crosslinkers, primers based on resins or crosslinkers containing carboxyl-functionalities, primers based on resins or crosslinkers containing hydroxyl-functionalities, and amine-functional resins and hardeners. Nevertheless, the applied PLP-compositions are generally relatively inert, even when not or partially cured, which contribrutes to their good preservation and lubricating properties.

Besides those already mentioned, the PLP-compositions of the invention also provide the following advantages:

- the PLP-compositions provide for rapid curing, even at low or moderate temperature;
- the PLP-compositions have good chemical and physical stability. They generally have a pot-life of at least several weeks at room temperature;
- the PLP-compositions are non-toxic and not (too) damaging to the environment. Also, they are not expected to release harmful substances such as toxic fumes when the metal substrates on which they have been applied are formed, processed or worked in any other way such as by welding.
- the PLP-compositions provide good wetting of the metal surface and appropriate viscosity;
- as a preservative, the PLP-compositions have excellent film-forming properties, providing a uniform, sealed layer that provides good protection against corrosion;
- as a lubricant, the PLP-compositions provide tribological and protective properties which are equal or better than those of conventional systems, even when fully or partially cured;
- by appropriate choice of the epoxidized oil(s) and the further components as described above, the intrinsic properties of the PLP-compositions can be fine-tuned to a specific application and/or to meet the demands of applicators and end-users;
- the PLP-compositions are economically favourable.

Also, the compositions of the invention show good resistance to oxygen, even when applied to the metallic substrate. This in contrast to coatings based on the corresponding unsaturated oils, in particular drying oils, which are known to polymerise when exposed to outside air.

As mentioned above, the epoxidized oils of the invention can be cured by any chemical or physical curing mechanism or curing technique known per se, such as via curable functional groups, the presence of amine compounds or the presence of phenol and phenolic derivatives, or a similar chemical reaction. However, research by applicant has shown that either UV-curing of at least one epoxidized oil or thermal curing of a mixture of a mixture of at least one epoxidized oil an at least one fatty acid are preferred.

For UV-curing, the PLP-compositions used preferably contain at least one UV-initiator as the "crosslinking component". Suitable UV-initiators are known per se, and include those which are referred to most frequently in connection with the photoinitiated polymerization of epoxy resins, such as onium salts possessing a non-nucleophilic anion such as $PF_6^-$, $SbF_6^-$, $AsF_6^-$ or $BF_4^-$.

Examples of suitable commercial photoinitiators are UVI 6990 (Union Carbide), Cyracure UVI-6974, Cyracure UVI-690 and Rhodorsil Photoinitiator 2074.

The UV-initiator is used in an effective amount, preferably 1-5% by weight of the total composition.

The UV-curable PLP's composition can be cured by irradiation with ultraviolet radiation of a suitable wavelength, generally between 200 and 350 nm, generally at temperatures of between 0°C up to 150°C, preferably room temperature up to 110°C, and using irradiation times of less than 1 minute, usually less than 10 seconds.

In a preferred embodiment, the UV-curable PLP-compositions essentially comprise only the one or more epoxidized oils and an UV-initiator, although other additives (such as those mentioned above) can be present in minor amounts.

The UV-curable PLP-compositions provide the following advantages:

- very fast cure times, typically 2-5 sec;
- no oxygen-inhibition;
- less sensitivity to moisture by the hydrophogic character of the base oil;
- the lubrication/coating properties can optionally be fine-tuned by adding a fatty polyol or by combining different epoxy compounds;
- Good chemical stability when not exposed to UV-radiation, which provides for a long pot-life and good stability during preservation.

Also, UV-curing can optionally be combined with a thermal post-cure, for instance by 100°C during 10 min. This post-cure can also take place during the curing of the metal primer/topcoat, to provide even further increased intercoat adhesion.

Another preferred embodiment of the invention comprises the thermal curing of a combination of epoxidized oils and a cross-linking component capable of reacting with the epoxidized oil to form crosslinked structure.

A particularly preferred class of cross-linking components are the so-called fatty polyacids. In general, these comprise dimers, trimers or higher mers (including "intermediate" mers, such as the "1.5 mers") of unsaturated fatty acids, or mixtures thereof, containing an average at least two functional groups, in particular at least two carboxylgroups, per mer.

Suitable mixtures of dimeric and trimeric fatty acids for use in the invention are commercially available under the name of Pripol 1040 (trimer fatty acid), Pripol 1013 (dimer fatty acid), or can be obtained in manner known per se by dimerisation, trimerisation of oligomerisation of unsaturated fatty acids, optionally followed by isolation/purification of a desired fraction, such as by distillation.

The polyacids used in the invention are preferably based on/obtained from natural unsaturated fatty acids, such as can be obtained from the saponification of natural fats and oils. These unsaturated acids will generally comprise (in monomeric form) 6-32, usually 9-24, often 16 or 18, carbon atoms, and generally 3 or less, and usually 2 (conjugated or non-conjugated) or only 1 unsaturated bond(s) per chain. For a further description of polyacids and their preparation reference is made to the standard handbooks.

The epoxidized oil and the fatty polyacid are used in a suitable ratio, generally from 1-99% to 99-1%, depending on the relative molecular weights. Usually, the amounts of oil and polyacid are chosen such that the amount of epoxygroups and carboxylgroups is between 10:1 to 1:10, preferably about stoichiometric.

The resulting PLP-compositions are generally non-sticky, and can be cured under moderate conditions (20-30 min. at 160-180°C).

Instead of the fatty polyacids, other suitable cross-linking components may be used, such as suitable derivatives of fatty acids, including esters thereof.

The PLP-compositions of the invention may be applied to any metallic substrate, but is specifically suited for metal surfaces which are subject to chemical attack or corrosion, such as iron, steel, aluminium, in particular strip steel. The invention is particularly applicable to the field of metalworking.

The invention is in particular suited for metals which are to be stored, transported, formed and/or coated. They are also suitable as preservatives/lubricants for machine tools and steel cables; in such applications, the cured PLP-composition may be the only coating present.

The invention further relates to a method for treating metallic substrates using a PLP-composition as described herein, which method comprises at least the step of:

- applying the PLP-composition onto the metallic substrate; and also preferably comprises at least one step of:
- (at least partly) curing the PLP-composition, as described hereinabove; and optionally further comprises the steps of:
- forming the PLP-carrying metallic substrate; and/or
- applying a further primer or coating onto the PLP-carrying metallic substrate.

The least one step in which the PLP-composition is (at least partly) cured can be carried out after the PLP-application has been applied onto the metallic substrate, but prior to storage, transportation and/or forming of the substrate; after the metallic substrate has been formed but prior to application of the final or topcoat; or both. Also, curing, additional curing and/or post-curing of the PLP-coating can take place during curing of the final (top)coat.

The method of the invention preferably does not comprise any step in which the applied PLP-composition is removed.

The PLP-composition can be applied in any manner known per se for applying a coating, such as spraying, rolling, dipping, brushing, pouring, by doctor blade or doctor roll; and in any suitable thickness which is at least sufficient to cover and protect the metallic surface and to fill up or coat any surface irregularities so as to provide the lubricating action of the coating.

In general, the thickness of the PLP-layer will be 0.1-10 $\mu$m, preferably 1-10 $\mu$m, more preferably 1-2 $\mu$m. This is less than the usual thickness for conventional metallic primer layers, which is in the range of 20-200 $\mu$m.

The forming of the metallic substrate carrying the PLP-compositions can be carried out in any manner known per se, including cold forming processes such as drawing, deep drawing, rolling, stretching or bending; and extrusion techniques.

The further, final or top-coat can then be applied in any manner known per se, such as those described above for application of the PLP-composition. The topcoat can also be cured in a manner known per se, which may be the same as of different from the method used for curing the PLP-composition.

The invention further relates to the use of a composition comprising at least one epoxidized oil, more preferably a PLP-composition as described herein, in the treatment of metallic substrates and/or surfaces. More specifically, **the** invention relates to the use of a composition comprising at least one epoxidized oil, more preferably a PLP-composition as described herein, as a preservative, as a lubricant or as a primer for metallic substrates/surfaces; more preferably as a combination of any two thereof, and most preferably as a combination of all three thereof.

The invention further relates to metallic substrates treated with the (noncured, partly cured or fully cured) PLP-application. The metallic substrates or surfaces may be formed and may also carry a further coating on the PLP-layer. In a special embodiment, the application relates to semi-finished products such as metal (steel) bars, plates, cable etc. or strip steel treated with the PLP-composition.

The invention will now be illustrated by means of the following non-limiting Examples and the Figures, in which:

- Figure 1 shows a graph of viscosity vs temperature for different PLP-compositions of the invention.
- Figure 2 shows the influence of UV irradiation dose on surface energy for a PLP coating based on Edenol B316.
- Figure 3 shows the potlife (measured as the change of viscosity in time at 22°C) of a PLP-mixture of Edenol B316 and Pripol 1040.
- Figure 4 shows the general principle of the TNO-slide/sheet-tribometer.
- Figure 5 shows the results of frictional measurements using the TNO-slide/sheet-tribometer of PLP-compositions and prior art lubricants
- Figure 6 shows a schematic representation (in crosssectional side-view) of the deep-drawing process of Example XI
- Figure 7 shows the metal cup obtained by the deep-drawing process of Figure 6/Figure 7.

EXAMPLE I: General properties of fatty compounds.

In this Example, for different fatty compounds, general properties are determined which are relevant for PLP applications. Viscosity is an important issue, not only considering the lubricative properties, but from the application point of view as well. Namely, in order to apply thin layers (around 1 $\mu$m), viscosity of the PLP should not be too high. On the other hand, too low viscosities would lead to poor lubrication.

Another important parameter is the surface energy of the PLP, both before and after curing. For good wetting of a PLP-wetted surface by a metal primer, the surface energy of the primer should be lower than that of the PLP. Due to the fatty and apolar character of the PLP's, these compounds are generally expected to possess rather low surface energy values.

**Experimental**

A. Viscosity measurements:

A stoichiometric mixture of Edenol B316 and Pripol 1040 was prepared. The viscosity of this mixture was measured with a Brookfield Model DV-II+ Viscometer (Spindle 4, 100 RPM) at three different temperatures, resp. 25, 50 and 75°C. Next to this, the viscosity of Edenol B316 was measured using the same procedure.

B. Contact angle measurements:

Contact angles of water and diiodomethane on coated substrates were measured using a Krüss G40 contact angle system provided with an automated Krüss G1041 Video Image Analysis System at room temperature (18-20°C). Surface energies were calculated from the contact angles determined.

**Results and Discussion**

C. Viscosity of PLP basestocks.

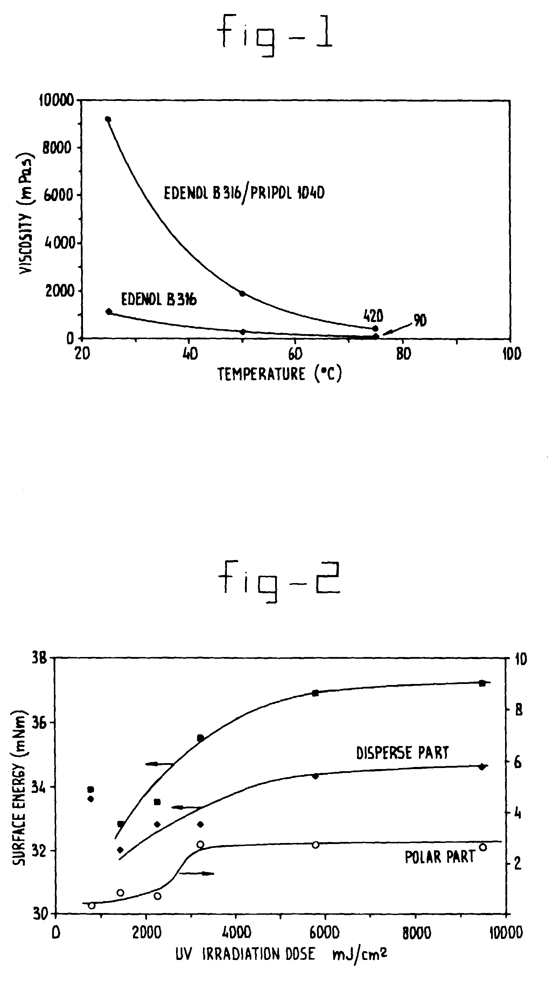

A graph of viscosity vs temperature for different PLP-compositions is given in Figure 1.

D. Surface energy of PLP's

It was attempted to measure the contact angle of water on PLP layers containing fatty acids (Pripol 1040 or 1013) before curing. However, it was observed that within a few seconds, an interference pattern in the outer layer of the drop started to move. Shortly after this, the contact angle of the drop decreased rapidly, and finally the water wetted the PLP surface.
From different PLP materials, the surface energy was calculated via determination of the contact angle of water and diiodomethane. As a reference, the surface energy of Flexine MM (white, Akzo Nobel) was determined as well after curing. In the next Table, results are presented.

Table 1: Surface Energies of different PLP systems, Flexine given as a reference

TABLE 1

| Surface Energies of different PLP systems, Flexine given as a reference | | | |
|---|---|---|---|
| | Surface Energy (mN/m) | Disp. Part (mN/m) | Polar Part (mN/m) |
| UVR-6110/Edenol B316 (10/90) with 5% Cyracure UVI 6990 | 40.3 | 38.7 | 1.6 |
| Pripol 1040/Pripol 1013 (25/75) with Edenol B316 | 34.2 | 32.3 | 1.9 |
| Flexine MM white | 44.4 | 43.9 | 0.5 |

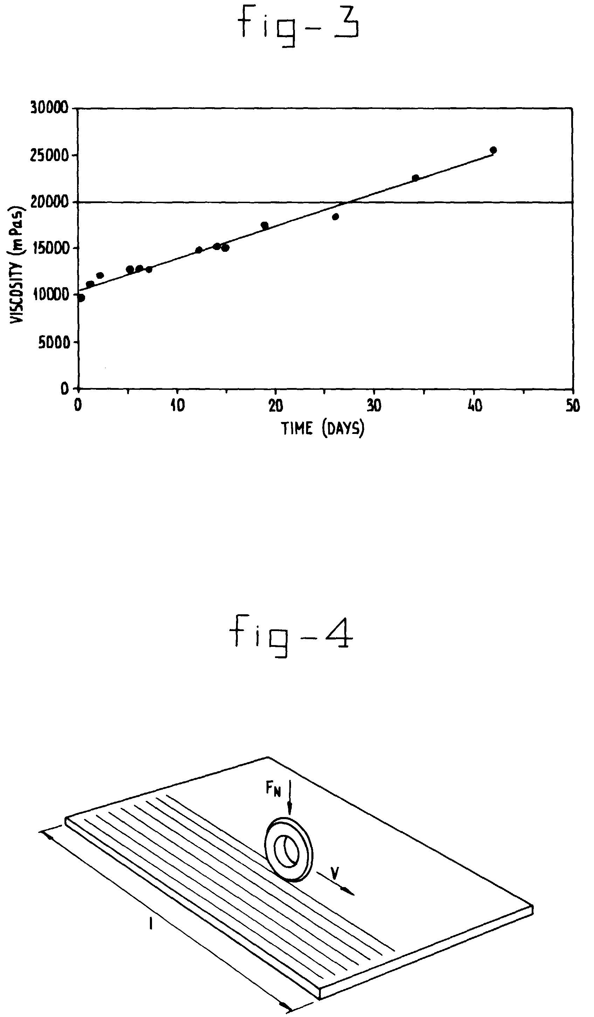

From Table 1, it can be seen that surface energies of the PLP systems investigated are significantly lower than that of Flexine MM. For good wetting of a wet coating on a substrate, the surface energy of the latter should generally be higher. Thus concerning these results, no good wetting of Flexine MM on these PLP's can be expected without use of wetting improvers. Figure 2 shows the influence of UV irradiation dose on surface energy for a PLP coating based on Edenol B316. The increase of surface energy with UV irradiation dose becomes apparent and can be explained by degradation reactions in the coating. Due to such reactions, the polarity of the coating increases. For the initial polar part of the surface energy was relatively low, and increased with UV irradiation time. However, after a certain dose, the polar surface energy remains constant. Upon UV irradiation, the surface of the coating first will be due to degradation reactions and the surface energy will gradually increase. After a certain time, the surface has been completely reacted, and the surface energy will maintain constant. From this moment, only degradation reactions in the bulk coating will proceed.

Excessive UV irradiation might be a method for increasing the polarity of the surface and hence increasing the wetting and adhesion by the primer which will be applied on this PLP. In order to realize this, a dose should be chosen at which the surface is sufficiently attacked, while the bulk coating is not the subject of degradation reactions.

Based upon the above considerations and measurements, it was expected that the PLP-compositions of the invention would not be particularly suited in the invention. Namely, no good wetting of paints is generally be expected on substrates (in this case the PLP layer) of significant lower surface energy. In practice, however, it was surprisingly found that the PLP-compositions of the invention provide good properties, as demonstrated by the results given below.

Also, it is clear from the above that, even at 70°C, the viscosity of the PLP-compositions of the invention may be too high for some specific methods of application. In those cases, using an (aqueous) emulsion of a PLP-composition as described above may be advantageous.

Example II: Systems based on epoxy-functional compounds and cationic UV-initiators.

A. Sample preparation:

Samples were prepared by weighing determined amounts of epoxide, UV initiator, additives and coreagants in a flask. After vigourously stirring, thin films of defined thickness were prepared on glass or metal plates by means of a doctor blade.

B. UV Irradiation:

Samples were lead past a Philips HOK 20/100 UV lamp by means of a conveyor belt. The distance between lamp and sample was kept constant at 14 cm. The radiation dosis amounted to 610-630 mJ/cm$^2$ unless described differently. Due to the intensity of the UV lamp, temperature of the samples increased to circa 60°C upon irradiation. Eventually, samples were preheated prior to UV irradiation. After UV irradiation, samples were postcured in an aircirculated oven at 100°C.

C. Adhesion test:

A cross cut test was performed including evaluation after tape (Scotch) disrupture, standard to NEN 5337, equivalent to ISO 2409 (scale: 0=excellent, 5=poor).

D. MEK rub test:

A cotton-endcapped hammer was soaked with methyl ethyl ketone, and double rubs of about 5 cm were performed while keeping the exerted pressure constant at ca. 90 N/m$^2$. The number of double rubs were counted, which were required to reach the substrate.

**Results and Discussion**

It was expected that the cationic curing reaction of epoxidized oils would proceed significantly slower than the curing of aliphatic diepoxides such as UVR-6110 (Union Carbide). In order to investigate this, Edenol B-316 (Henkel) was chosen as epoxidized oil, and curing of this compound was compared to curing of UVR-6110 and a mixture of UVR-6110 and Edenol B-316 (Table 2).

Table 2: Comparison of curing of Edenol B-316 with UVR-6110, 3 weight% UVI-6990

TABLE 2

| Comparison of curing of Edenol B-316 with UVR-6110, 3 weight% UVI-6990 | | | |
|---|---|---|---|
| Composition (weight%) | | Evaluation | |
| UVR-6110 | Edenol B-316 | After UV irradiation | After postcuring |
| 100 | 0 | tacky | not tacky |

TABLE 2 (continued)

| Comparison of curing of Edenol B-316 with UVR-6110, 3 weight% UVI-6990 | | | |
|---|---|---|---|
| Composition (weight%) | | Evaluation | |
| UVR-6110 | Edenol B-316 | After UV irradiation | After postcuring |
| 10 | 90 | not tacky | not tacky |
| 0 | 100 | not tacky | not tacky |

No significant difference was observed between curing of UVR-6110 and Edenol B-316 as can be seen from Table 2. Next to UVI-6990, Cata 200 (Rhone-Poulenc) was used as an UV initiator. Also in this case, curing results did not differ significantly. For this reason, curing conditions for Edenol B316 coatings were generally chosen identical to the conditions for UVR-6110, as given in technical specifications.

Edenol B316 was cured with different amounts of UVI-6974. Results are summarized in Table 3. Curing of thinner films appeared to proceed slower, which first is indicated by more tacky films after postcuring. Furthermore a lower number of MEK double rubs was necessary for going through the coating, although it must be noted that a film thickness around 9 μm is very thin in comparison to the the roughness of the cotton wound around the hammer. For that reason, the results must be interpreted with care. For the thicker films, only small amounts of photoinitiator (ca. 2.5 wght%) were necessary for completely curing the coating. This initiator concentration is comparable to the concentrations necessary for commercial (aliphatic di-)epoxide to be cured.

Table 3: Edenol B316 cured with different amounts of UVI-6974 for different layer thicknesses

TABLE 3

| Edenol B316 cured with different amounts of UVI-6974 for different layer thicknesses | | | | |
|---|---|---|---|---|
| coating thickness (μm) | initiator conc. (wght%) | Coating evaluation after | | MEK double rubs |
| | | UV irradiation | postcuring | |
| 8.6 | 0.59 | tacky | tacky | - |
| | 1.19 | " | " | 30 |
| | 2.51 | " | " | 30 |
| | 3.11 | " | " | 50 |
| | 4.07 | " | " | 25 |
| | 5.41 | " | not tacky | >100 |
| 17.2 | 1.19 | tacky | slightly tacky | 10 |
| | 2.51 | " | " | >100 |
| | 3.11 | " | " | >100 |
| | 4.07 | " | " | >100 |
| | 5.41 | " | " | >100 |

The slower curing of the thinner coatings might be explained by the relatively larger influence of air humidity on thinner layers. Particularly in the case of thin coatings, as would be used in PLP applications (typically 1-2 μm), special measures should be taken, e.g., nitrogen atmosphere, in order to avoid curing inhibition in surroundings with increased humidity.

A large number of fatty polyols is commercially available. Addition of polyols to epoxidized oils offers possibilities for tuning coating properties to particular applications. Mixtures of Edenol B316 and Sovermol Pol 1072 were cured in different ratios. As a reference, experiments with mixtures of UVR-6110 and Sovermol Pol 1072 were performed. In Table 4, results are given.

Table 4: Curing experiments of epoxy resins with different amounts of Sovermol Pol 1072 polyol (epoxide/hydroxy ratios given refer to molar amounts of concerning groups, 5 weight% UVI-6974)

TABLE 4

| Curing experiments of epoxy resins with different amounts of Sovermol Pol 1072 polyol (epoxide/hydroxy ratios given refer to molar amounts of concerning groups, 5 weight% UVI-6974) | | | | |
|---|---|---|---|---|
| epoxy resin | epoxy/hydroxy | Coating evaluation after | | MEK double rubs |
| | | UV irradiation | post curing | |
| UVR 6110 | 100/0 | not tacky | not tacky | >100 |
| " | 95/5 | not tacky | not tacky | >100 |
| " | 90/10 | tacky | tacky | <10 |
| " | 80/20 | tacky | tacky | <10 |
| Edenol B316 | 100/0 | not tacky | not tacky | >100 |
| " | 95/5 | not tacky | not tacky | >100 |
| " | 90/10 | slightly tacky | slightly tacky | ±100 |
| " | 80/20 | tacky | slightly tacky | <10 |

Both UVR 6110 and Edenol B316 do not allow too high amounts of polyol for forming cured films. At polyol percentages higher than 10%, a slower curing reaction can be observed in case of the Edenol B316 resin. For UVR-6110, even a lower amount of polyol is allowed. However, the worse results for UVR-6110 might also be explained by the thinner coating layers (9 μm) in contrast the the thickness of the Edenol B316 layers (ca. 17 μm). From these experiments it becomes apparent, that presence of hydroxy groups significantly slows down the curing reaction by introducing a different mode of reaction (chain transfer). Only smaller amounts of polyol can be used in order to adjust coating properties.

In practice, adhesion improvers can be required particularly in the case of UV curing resins. The influence of three different adhesion improvers on cationic curing of Edenol B316 was investigated. Selected adhesion improvers were: Silquest A-187, A-189 and A-1100 (Union Carbide). Table 5 overviewes curing experiments of Edenol B316 in presence of these adhesion promotors.

Table 5: Curing experiments of Edenol B316 with UVI 6974 in presence of different adhesion improvers (layer thickness 9 μm, postcuring 15 min. at 150°C)

TABLE 5

| Curing experiments of Edenol B316 with UVI 6974 in presence of different adhesion improvers (layer thickness 9 μm, postcuring 15 min. at 150°C) | | | | |
|---|---|---|---|---|
| adhesion promotor | structure | Evaluation after | | MEK double rubs |
| | | UV radiation | post curing | |
| - | - | tacky | not tacky | >100 |
| Silquest A-187 | $(CH_2OCH)\text{-}CH_2O(CH_2)_3Si(OCH_3)_3$ | " | " | >100 |
| Silquest A-189 | $HS(CH_2)_3Si(OCH_3)_3$ | " | " | 25 |
| Silquest A-1100 | $H_2N(CH_2)_3Si(OC_2H_5)_3$ | liquid | tacky | -- |

Presence of Silquest A-1100 leads to severe inhibition of the cationic curing process. This is due to the basic amine groups, which react with the acid formed upon UV irradiation of the photoinitiator. For that reason, Silquest A-1100 is not suitable as adhesion promotor in the cationic curing process.
The basicity of the thiol groups in Silquest A-189 is apparently high enough to show a significant degree of inhibition as well. Silquest A-187 does not affect the cationic curing reaction, and is additionally compatible with epoxy resins due to its epoxy functionality.

Comparative Example I: Systems based on polycarboxylic acids and polyols.

In order to investigate the curing of a mixture of a fatty polyol with a fatty polyacid, stoichiometric amounts of Sovermol Pol 1072 (polyol) and Pripol 1040 (fatty trimer acid) were prepared and cured under different conditions. 2.1 g Pripol 1040 was mixed with 3.9 g Sovermol Pol 1072 and vigorously stirred with a glass bar. Thin films of ca. 80 $\mu$m were cast on glass plates. Curing was performed at different temperatures during different times in an aircirculated oven. Appearance and resistance against MEK double rubs were investigated as a function of curing time. The curing reaction of Sovermol Pol 1072 with Pripol 1040 was also monitored by thin film FT-IR spectroscopy.
The yellow starting formulation was characterised by a fatty non-interacting behaviour which is favourable for lubricant applications. Table 6 shows the results of curing experiments.

TABLE 6

| Appearance and MEK double rubs of coatings from stoichiometric amounts of Pripol 1040 and Sovermol Pol 1072 after different times of curing as a function of curing temperature | | | |
|---|---|---|---|
| Curing temp. (°C) | Time (hrs) | Appearance | MEK double rubs |
| 180 | 0.5 and 1 | Yellow liquid film | - |
| | 2 | Viscous (at RT) hellow-brown film | - |
| | 5 | Tacky brown film, viscous at 180°C, solid at RT | 30 |
| 200 | 1 | Rubbery and tacky yellow-brown film | ±50 |
| | 2.5 | Rubbery and non-tacky brown film | >100 |
| | 16 | Flexible dark-brown coloured non-tacky film | >100 |
| 220 | 0.5 | Liquid, brown film | - |
| | 1 | Rubbery brown film, slightly tacky | >100 |
| | 2 | Rubbery and non-tacky brown film | >100 |
| | 16 | Hard non-tacky film | >100 |

The curing reaction at 180°C was too slow to apply in commercial processes. Only after 5 hours, a viscosity increase could be observed. At higher temperatures, the crosslinking proceeded faster. However, the brown discoloration indicated other reactions than esterification (e.g., degradation, oxidation of unsaturated bonds, formation of conjugated unsaturated bonds, etc.). This was further indicated by FT-IR spectra of cured samples. It was found that fatty mixtures of a trimer acid and polyol can only be crosslinked during reasonable times at elevated temperatures (>200°C). Also, strong brown discolouration of the coatings suggests other reactions to occur next to esterification of hydroxy and acid groups.
Concerning the fatty behaviour of the fatty polyol/trimer acid mixtures, suitable lubricative behaviour can be expected. However, the quite vehement curing conditions are not favourable for practical applications.

Comparative Example II: Systems based on polyols and polydimethylesters.

Concerning their lubricating behaviour, dimethylester compounds were expected to be suitable candidates as base materials for PLP systems, as illustrated by the large amount of commercial available lubricants which are based on ester compounds. However, no efficient curing reaction could be performed using dimethylester compounds with fatty polyols. Addition of different basic catalysts appeared to be ineffective. Only at very high temperatures (>220°C), a rapid crosslinking could be observed. However, this can probably be ascribed to degradation reactions as illustrated by the strong brown discoloration of the products.

A. Pripol 1040 methyl ester with Pripol 2033:

0.45 g Pripol 2033 was mixed with 0.57 g Pripol 1040 methyl ester. Thin films of the yellow-brown mixture were casted on glass plates. The films were cured in an air-circulated oven at 200°C during different times. The curing reaction was extremely slow. Also, a gradual brown discoloration could be observed.

B. Sovermol Pol 1072 with dimethyl sebacate:

Stoichiometric amounts of Sovermol Pol 1072 and dimethyl sebacate were mixed together, e.g., 1.0 g Sovermol with 0.20 g dimethyl sebacate) and eventually 2 wght% catalyst (triethylamine or titanium tetra-isopropoxide). Curing was performed at 180°C in aircirculated ovens during different times.

Without addition of a catalyst, a slow curing reaction could be observed (ca. 12 hrs at 180°C) which is not in the range of those for application in commercial processes. No significant improvement was reached by addition of triethylamine, and curing appeared even to occur slower in presence of triethylamine. Deprotonation of Sovermol Pol 1072 with NaOH as well appeared to be ineffectual.

Finally, titaniumisoproxide was investigated as a catalyst. Amounts of catalyst upto 5 wght% did not show any significant improvement compared to the system without catalyst. At 220°C, a rapid cure was observed resulting in fully cured films within 0.5 hrs. However, severe brown discoloration indicated a crosslinking mechanism different from the transesterification reaction (e.g., partial degradation).

EXAMPLES III-VI: Formulations.

Several permanent liquid PLP-systems based upon epoxidized oils for use on metallic substrates were prepared as follows:

III. UV-curable coating on the basis of an epoxidized oil.

A mixture of Edenol B316 (Henkel) with 3 wt.% UV-6990 (Union Carbide) is applied as a thin layer (about 1 μm) on degreased strip steel using a doctor blade. The metal plate is then led under an UV-source (HOK 20/100) at a distance of 14 cm. The speed is such that the UV-dose is 610-630 mJ/cm$^2$. After UV-radiation a primer (Sigma Moffelprimer 67 EU) is applied at a thickness of a 35 μm. The system is thermally cured in an oven (170°C/15 min.). Both the adhesion between the top coat and the UV-hardened PLP-layer, as well as the adhesion between the UV-hardened PLP-layer and the steel surface were scored as zero. (5 = very bad, 0 = excellent).

IV. UV-curable formulation on the basis of epoxidized oils and fatty polyols.

A mixture of Edenol B316 and Sovermol Pol 1072 (both Henkel, ratio epoxy/hydroxy = 95/5) with 5 wt.% UV-I 6990 (Union Carbide) is applied as a thin layer (about 3 μm) on degreased stripped steel using a doctor blade. The metal plate is led under an UV-source (HOK 20/100) at a range of 14 cm. The speed is such that the UV-dose is 610-630 mJ/cm$^2$.

After UV-radiation a primer (Sigma Moffelprimer 67 EU) is applied at a thickness of a 35 μm. The system is thermally cured in an oven (170°C/15 min.). Both the adhesion between the top coat and the UV-hardened PLP-layer, as well as the adhesion between the UV-hardened PLP-layer and the steel surface were scored as zero. (5 = very bad, 0 = excellent).

V. Thermal-curable formulation on the basis of epoxidized oils and only fatty acids.

A stoichiometric mixture (ratio epoxy/carboxylated acid is 1/1) of Edenol B316 (Henkel) and Pripol 1040 (Unichema International) is applied as a thin layer (about 2 μm) on degreased steel. On this liquid layer a primer (Sigma Moffelprimer EU 67) is applied. The combined system is then cured in an oven (180°C/20 minutes). Adhesion between the top layer and the lubricant layer and the adhesion between the steel substrate and the coating were scored as zero.

When after applying the PLP layer a (partial) thermal curing is carried out before the primer is applied, the choice of the primer is less critical with a view to defects in the coating. Also, in this manner, an "overbake" of the primer can be avoided.

VI. UV or thermally curable emulsion on the basis of epoxidized oils.

The viscosity of liquid-permanent PLP systems can be decreased by using emulsions. For this purpose, thermally curable formulations can be dispersed in water.

a) For UV-curable emulsions a mixture of Edenol B 316 with 4 wt.% Disponyl 23 (both Henkel) and 3 wt.% UVI 6990 (Union Carbide) can be prepared. To this mixture, under stirring, water is added until the desired viscosity is achieved. Generally, the PLP/water ratio will be between 10/90 and 25/75. A thin layer of the emulsion (about 10 μm) is applied to a degreased steel plate. The water is then removed in an oven with forced air circulation (10 minutes at 60°C), after which UV-curing is carried out and a primer is applied as described above.

b) For thermally curable emulsions a stoichiometric mixture (ratio epoxy/carboxylic acid is 1/1) of Edenol 2316 (Henkel) and Pripol 1040 (Unichema International) is mixed with 10 wt.% surfactant (for example a mixture of Disponyl 23 (Henkel) and Tween 20 (Merck)). Water is added as described above. After drying, the primer is also applied as described above.

EXAMPLE VII: Potlife measurement.

The potlife of an epoxidized oil/fatty acid mixture of the invention (a mixture of Edenol B316 and Pripol 1040) was determined by measuring the change of viscosity in time at 22°C. The results are given in Figure 3.

EXAMPLE VIII: thermal curing of epoxidized oils with fatty polyacids.

The formation of a coating from mixtures of Edenol B316/Pripol 1030 and Pripol 1040) were investigated. The mixture was stoichiometric with respect to epoxy and acid groups, as a top coat, Flexine MM, white, ( AKZO Nobel) was applied. The thickness of the layers was 3-4 μm for the PLP-layer and 33 μm for the top coat. The results are given in Table 7.

TABLE 7

| Coating formation mixtures of Edenol B316 / Pripol 1013 / Pripol 1040 | | | |
|---|---|---|---|
| Ratio 1013/1040 | Viscosity at 24°C (mPas) | Adhesion test topcoat-primer[1] | MEK double rub test PLP layer |
| 0/100 | 3600 | 1 | >100 |
| 25/75 | 2800 | 1-2 | >100 |
| 50/50 | 2200 | 1-2 | ±100 |
| 75/25 | 1800 | 2 | ±80 |
| 100/0 | 1400 | 1-2 | ±60 |
| • Stoichiometric with respect to epoxy and acid groups <br> • Top coat: Flexine MM, white (Akzo Nobel) <br> • Layer thicknesses: <br> PLP 3-4 μm <br> Top coat 33 μm | | | |

[1] 0 = excellent, 5 = very bad

EXAMPLE IX: UV-curing of epoxidized oils.

The UV-curing of epoxidized oils was investigated. The results are given in the next Tables 8-11.

TABLE 8

| Coating formation UVR-1610/Edenol B316 (10/90) with Flexine MM topcoat (white) | | | |
|---|---|---|---|
| Photoinitiator | Adhesion improver | Adhesion UV-coat | Adhesion top layer |
| Cata 200 | A-187 | 5 | 5+ |
| Cata 200 | A-189 | | 2 |

TABLE 8 (continued)

| Coating formation UVR-1610/Edenol B316 (10/90) with Flexine MM topcoat (white) | | | |
|---|---|---|---|
| Photoinitiator | Adhesion improver | Adhesion UV-coat | Adhesion top layer |
| UVI 6990 | A-187 | 0 | 1-2 |
| 3 wght% photoinitiator, 1 wght% adhesion improver<br>PLP thickness: 3 μm, topcoat thickness: 30 μm<br>Curing schedule:<br>PLP: ± 5 sec UV irrad. (620 mJ/cm$^2$)<br>PLP and topcoat: 15 min. at 150°C | | | |

TABLE 9

| Coating formation Edenol B316 with different topcoats | | | |
|---|---|---|---|
| Top coat | % photo initiator | Adhesion PLP | Adhesion topcoat |
| Flexine MM | 3 | 0 | 2 |
| Flexine MM | 5 | 0 | 2-3 |
| Sigma 67 EU | 3 | 0 | 0-1 |
| Sigma 67 EU | 5 | 0 | 0-1 |
| Adhesion improver:1 wght% A-189<br>Photoinitiator: UVI-6990<br>Curing schedule:<br>PLP: ± 5 sec. UV-irradiation<br>PLP and topcoat: 15 min 150°C (Flexine) or 170°C (Sigma) | | | |

TABLE 10

| Coating formation of Edenol B316/UVR-6110 mixtures with different amounts of Sovermol Pol 1072 polyol | | |
|---|---|---|
| Epoxy/hydroxy ratio | Adhesion PLP coat | Adhesion topcoat |
| 100/0 | 0 | 1-2 |
| 95/5 | 0 | 2 |
| 90/10 | 0 | 2 |
| 75/25 | 0 | 3 |
| Ratio B316/UVR-6110      90/10 (wght%)<br>Photo initiator:      3 wght% UVI-6990<br>Adhesion additive:      1 wght% A-189<br>Thickness PLP:      3 μm<br>Top coat:      Flexine MM (35 μm) | | |

It can be seen that:

- Adhesion top coat decreases with increasing amount of polyol
- Adhesion improves with increasing amount of initiator: vide Table 12.

TABLE 11

| Coating formation of Edenol B316/UVR-6110 mixtures with different amounts of UV-initiator | | |
|---|---|---|
| Wght% UV-initiator | Adhesion PLP | Adhesion top coat |
| 3 | 0 | 1 |
| 5 | 0 | 0 |
| Epoxy:hydroxy = 95:5, top coat: Sigma 67 EU, adh.add. A-189 | | |

EXAMPLE X: Lubrication measurements.

The tribology of the PLP-compositions of the invention was determined on a TNO-slide sheet - tribological system, the general principle of which is shown in Figure 4.

A ring is slid under defined conditions (speed, force, etc.) over a metal plate. The friction coefficient is determined as a function of distance. As a limiting value for the friction coefficient 0.2 is taken.

The test conditions were as follows:

Sheet:        Cold rolled steel MCB St14-03, batch 1, 1mm
              App. Roughness // $R_a$=1.22 µm, $\perp$ $R_a$=1.22 µm

Slider:       WN 1.2379, hardened and tempered at 520°C
              App. Roughness // $R_a$=0.04 µm, $\perp$ $R_a$=0.08 µm
              Ø 44x8 mm, radius 6 mm

Parameters:

| | |
|---|---|
| sliding speed V | 0.5 m/s |
| Normal force $F_N$ | 150 N |
| Amount of lubricant | 4-6 mL/m$^2$ |
| Track length | 1800 mm |
| Temperature (humidity) | 25°C (34%) |

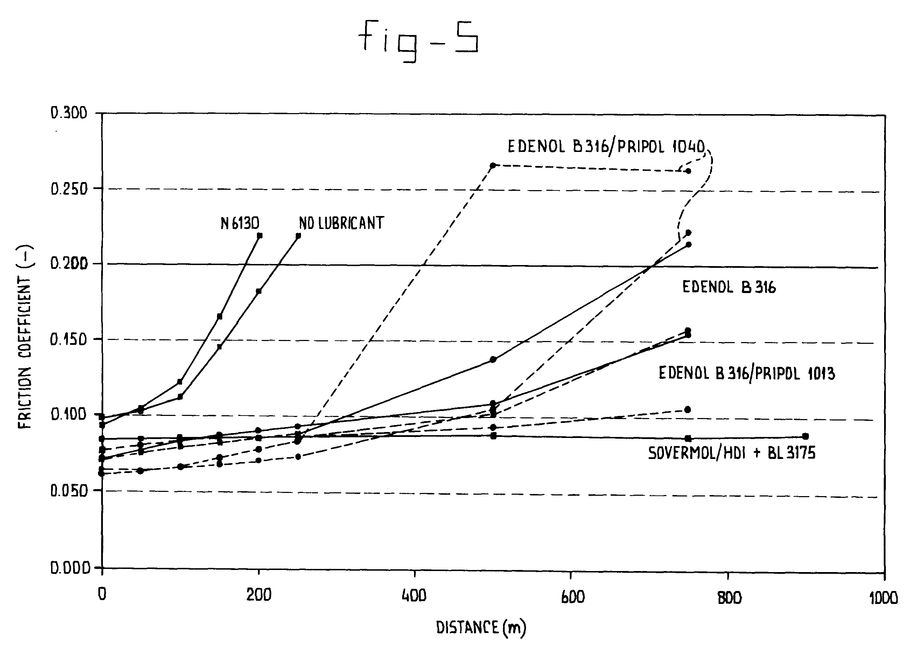

The results are given in Figure 5. It was found that when the PLP-systems of the invention were used, it took considerably longer for the friction coefficient to increase to the limiting value, compared to both the reference N6130 (Quaker) as well as the non-lubricated reference.

EXAMPLE XI: Deep-drawing experiments

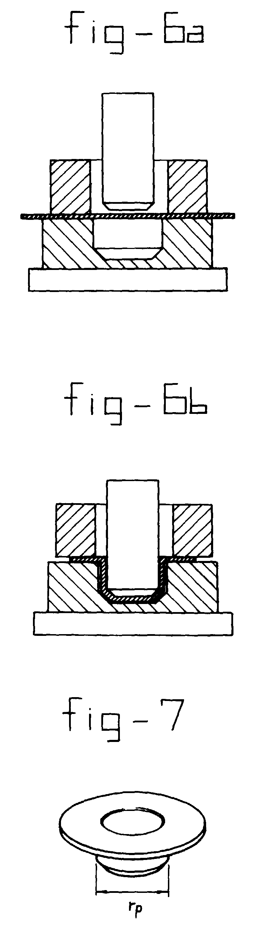

Deep drawing involves clamping a metal sheet between a blank holder and a die. Subsequently, a punch is rammed into the sheet, forcing it into the die. The metal sheet adapts to the shape of the die. In Figures 6a and 6b, the process is schematically shown, in which 1 is the punch, 2 is the blank holder and 3 is the blank.

The clamping force on the blank is adjusted since a too high force may result in tearing of the product, while a too low force causes wrinkling of the product. An important parameter in the deep drawing process is the drawing ratio:

$$\beta = r_{pl} / r_p$$

where $t_{pl}$ is the initial radius of the blank (before deep drawing), and $r_p$ is the radius of the product after deep drawing, as shown in Figure 7.

For a given punch with particular dimensions, the force necessary for drawing a cup increases with the radius of the initial blank. At a certain critical blank radius, this force exceeds the critical force which causes the cup wall to tear. Hence, a limiting drawing ratio can be expressed as:

$$\beta_{max} = r_{pl,max} / r_p$$

The limiting drawing ratio is dependent on material properties, blank thickness and lubrication. For a given blank and tool material, an impression of the efficiency of a particular lubricant can be obtained by determining the limiting drawing ratio.

A metal sheet (St 14-03 MCB, thickness 0.97 mm) was carefully degreased, after which a commercial lubricant or PLP was applied by brush. Excessive lubricant or PLP was removed with a tissue. Deep draw experiments were performed in order to determine the limiting drawing ratio for the different systems (die: $\varnothing$ = 50.0 mm). The results are given in Table 12.

TABLE 12

| Lubrication | Degreasing method[1] | Lubricated surfaces of metal sheet | Limiting draw ratio |
|---|---|---|---|
| No | NDF | - | 2.13 |
| No | H/IPA | - | 2.05 |
| Quaker N6130 | NDF | Only die-side | 2.23 |
| " | NDF | Both die- and punch side | 2.15 |
| " | H/IPA | Both die- and punch side | 2.15 |
| Petro fer S65 | NDF | Both die- and punch side | 2.20 |
| Petro fer S65 | H/IPA | Both die- and punch side | 2.2 |
| Edenol B316/Pripol1040 | H/IPA | Only die-side | 2.35 |
| " | H/IPA | Both die- and punch side | 2.23 |
| Edenol B316 | H/IPA | Only die-side | 2.28 |
| | H/IPA | Both die- and punch side | 2.25 |

[1] NDF: degreased with Nebol (fluid), H/IPA: degreased in azeotropic vapor of heptane and isopropanol

As can be seen from Table 13, limiting draw ratios in case of the PLP's generally are comparable or even higher than that of commercial reference lubricants.

**Claims**

**1.** Use of a composition containing at least one epoxidized oil as a preservative for metallic substrates, in particular for steel substrates such as strip steel.

**2.** Use of a composition containing at least one epoxidized oil as a lubricant for metallic substrates, in particular for steel substrates such as strip steel.

**3.** Use of a composition containing at least one epoxidized oil as a primer on metallic substrates, in particular on steel substrates such as strip steel.

**4.** Use of a composition containing at least one epoxidized oil both as a preservative and as a lubricant for metallic substrates, in particular of steel substrates such as strip steel.

**5.** Use of a composition containing at least one epoxidized oil both as a lubricant for and as a primer on metallic substrates, in particular for/on steel substrates such as strip steel.

6.  Use of a composition containing at least one epoxidized oil as a preservative for, as a lubricant for, and as a primer on, metallic substrates, in particular for/on steel substrates such as strip steel.

7.  Method for treating and/or processing of metallic substrates, said method comprising applying a composition containing at least one epoxidized oil to the metallic substrate.

8.  Method according to claim 7, further comprising at least one step of:

    -   storing and/or transporting the metallic substrate;
    -   forming the metallic substrate; and/or
    -   applying a (further) primer or coating onto the metallic substrate.

9.  Method according to claim 7 and/or 8, further comprising at least one step of (at least partly) curing the composition containing the at least one epoxidized oil.

10. Use according to any of claims 1-6, or method according to any of claims 7-9, in which the composition containing the at least one epoxidized oil further comprises at least one cross-linking component.

11. Use or method according to claim 10, in which the cross-linking component comprises at least one UV-initiator.

12. Use or method according to claim 10, in which the cross-linking component comprises at least one fatty polyacid.

13. Composition for the protection and treatment of metallic substrates, in particular of steel substrates such as strip steel, comprising at least one epoxidixed oil.

14. Composition according to claim 13, further comprising at least one cross-linking component.

15. Composition according to claim 14, in which the cross-linking component comprises at least one UV-initiator.

16. Composition according to claim 14, in which the cross-linking component comprises at least one fatty polyacid.

17. Composition according to any of claims 13-16, in the form of a liquid composition.

18. Use, method or composition according to any of the preceding claims, in which the epoxidized oil comprises an epoxidized derivative of a natural unsaturated fat or oil, in particular an epoxidized derivative of a natural "drying oil".

19. Metallic substrate, treated with a composition according to one of claims 12-16, and/or obtainable by the method of any of claims 7-9.

## fig-1

## fig-2

## fig-3

## fig-4

# fig-5

FRICTION COEFFICIENT (−)

EDENOL B 316/PRIPOL 1040

N 6130    NO LUBRICANT

EDENOL B 316

EDENOL B 316/PRIPOL 1013

SOVERMOL/HDI + BL 3175

DISTANCE (m)

fig - 6a

fig - 6b

fig - 7

$r_p$

## EUROPEAN SEARCH REPORT

**European Patent Office**

**Application Number**

EP 98 20 3365

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | GB 1 094 053 A (UNITED STATES STEEL CORPORATION) 6 December 1967 | 1-9,13, 17-19 | C10M101/04 C10M129/66 |
| Y | * the whole document * | 10-12, 14-16 | C10M173/00 C09D5/08 C08G59/34 |
| X | US 3 582 368 A (SALZBERG HAROLD KARL) 1 June 1971 * column 1, line 51 - column 2, line 23 * * column 3, line 12 - line 22 * | 1,3,7-9, 13,17-19 | C09D163/08 |
| X | US 2 930 708 A (CHATFIELD HERBERT WALTER) 29 March 1960 * column 1, line 51 - column 2, line 30 * | 1,7,9, 13,17-19 | |
| Y | US 5 318 808 A (CRIVELLO JAMES V ET AL) 7 June 1994 * page 3, line 38 - line 53 * | 10,11, 14,15 | |
| Y | ROSCH J ET AL: "POLYMERS FROM RENEWABLE RESOURECES: POLYESTER RESINS AND BLENDS BASED UPON ANHYDRIDE-CURED EPOXIDIZED SOYBEAN OIL" POLYMER BULLETIN, vol. 31, no. 6, 1 December 1993, pages 679-685, XP000412408 * abstract * | 10,12, 14,16 | |

**TECHNICAL FIELDS SEARCHED (Int.Cl.6)**

C10M
C09D
C08G

The present search report has been drawn up for all claims

| Place of search | Date of completion of the search | Examiner |
|---|---|---|
| THE HAGUE | 5 March 1999 | Rotsaert, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 98 20 3365

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-1999

| Patent document cited in search report | | Publication date | Patent family member(s) | | Publication date |
|---|---|---|---|---|---|
| GB 1094053 | A | | BE 661937 A | | 01-10-1965 |
| | | | DE 1452105 A | | 23-10-1969 |
| | | | FR 1427579 A | | 21-04-1966 |
| | | | NL 6504432 A | | 08-10-1965 |
| US 3582368 | A | 01-06-1971 | NONE | | |
| US 2930708 | A | 29-03-1960 | BE 555831 A | | |
| | | | CH 354193 A | | |
| | | | DE 1068408 B | | |
| | | | FR 1245511 A | | 01-02-1961 |
| | | | GB 832064 A | | |
| | | | NL 99935 C | | |
| | | | NL 215468 A | | |
| US 5318808 | A | 07-06-1994 | NONE | | |

For more details about this annex : see Official Journal of the European Patent Office, No. 12/82